# EUROPEAN PATENT APPLICATION

(11) **EP 4 764 244 A1**
(43) Date of publication of application: **24.06.2026**
(21) Application number: 24897353.9
(22) Date of filing: 18.11.2024
(51) Int. Cl.: F16D 7/02, F16D 43/20

(54) **TORQUE LIMITER**

(30) Priority: 30.11.2023 JP 2023202479
(71) Applicant: Origin Company, Limited, Saitama-shi Saitama 338-0823 (JP)
(72) Inventor: ISOBE, Taro, Saitama-shi, Saitama 338-0823 (JP); NEGISHI, Yukio, Saitama-shi, Saitama 338-0823 (JP); IKEGAWA, Shiori, Saitama-shi, Saitama 338-0823 (JP); MIZUYAMA, Yuta, Saitama-shi, Saitama 338-0823 (JP); YONEKURA, Kana, Saitama-shi, Saitama 338-0823 (JP)
(74) Representative: Müller-Boré & Partner Patentanwälte PartG mbB
(86) International application number: PCT/JP2024/040758
(87) International publication number: WO 2025/115666

(57) **Abstract**

A new torque limiter in which, even when an axial-direction length of an inner-side space (16a to 16d) whose axial-direction other side is closed by a shield member (10a to 10d) is longer than an axial-direction length of an inner-side member (6a to 6d), the inner-side member (6a to 6d) does not rattle in the axial direction in the above-described inner-side space (16a to 16d) is provided. The inner-side member (6a to 6d) or a braking member (8a to 8d) in close contact therewith is urged in an axial direction with respect to an outer-side member (4a to 4d) and the shield member (10a to 10d).

## Description

### Technical Field

The present invention relates to a torque limiter.

### Background Art

The following PTL 1 discloses a torque limiter including an outer-side member having an inner-side space whose one side in an axial direction is closed but the other side is open, an inner-side member and a braking member (coil spring) accommodated in the inner-side space, and a shield member which is combined with the outer-side member after the inner-side member and the braking member are accommodated in the inner-side space and closes the other side of the inner-side space, in which the outer-side member and the inner-side member are capable of relative rotation, and the braking member is disposed between the outer-side member and the inner-side member and applies a required braking torque to the relative rotation. Since the other side of the inner-side space is closed by the shield member after the inner-side member and the braking member are accommodated in the inner-side space, an axial-direction length of the inner-side space in which the other side is closed by the shield member is longer than the axial-direction length of the inner-side member.

In the torque limiter illustrated in PTL 1, though the outer-side member and the inner-side member are both rotatable, either one is fixed in some cases. When either one is fixed, the above-described torque limiter can be used as an angular-position holding apparatus when a hatchback of a vehicle is rotated/driven by a driving means such as an electric motor, for example. In the angular-position holding apparatus as above, an electromagnetic brake is usually used, but since the electromagnetic brake has a complicated constitution and a high price, use of a mechanical torque limiter with a simple constitution and a lower price is in demand. In this case, the outer-side member is fixed to the vehicle as a housing, and the inner-side member is coupled to a shaft for connecting the electric motor and the hatchback. In addition, as illustrated in Japanese Patent No. 7035254 applied by the applicant of the present application prior to the present application and already patented, the inner-side member is used as a joint member for connecting a shaft extending from the electric motor and a shaft extending from the hatchback in some cases.

### Citation List

### Patent Literature

PTL 1: JP 10-110739 A

### Summary of Invention

### Technical Problem

Thus, in the torque limiter illustrated in the above-described PTL 1, since the axial-direction length of the inner-side space with the other side closed by the shield member is longer than the axial-direction length of the inner-side member, the inner-side member has rattling in the axial direction in the above-described inner-side space, and there is a concern that a nonpreferable noise is generated due to the rattling during an operation.

The present invention was made in view of the aforementioned facts and a main technical problem thereof is to provide a new and improved torque limiter in which, though the axial-direction length of the inner-side space in which the other side is closed by a shield member is longer than the axial-direction length of the inner-side member, the inner-side member does not rattle in the axial direction in the above-described inner-side space. Solution to Problem

As a result of keen examination, the inventor and the like found out that the above-described major technical problem can be solved by urging an inner-side member or a braking member in close contact therewith to the axial direction with respect to the outer-side member and the shield member.

That is, according to first aspect of the present invention, as a torque limiter which solves the above-described major technical problem, such a torque limiter is provided, including:
an outer-side member having an inner-side space whose one side in an axial-direction is closed but the other side is open;
an inner-side member and a braking member accommodated in the inner-side space; and
a shield member which is combined with the outer-side member after the inner-side member and the braking member are accommodated in the inner-side space and closes the other side of the inner-side space, in which
an axial-direction length of the inner-side space in which the other side is closed by the shield member is longer than the axial-direction length of the inner-side member; and
the outer-side member and the inner-side member are capable of relative rotation, and the braking member is disposed between the outer-side member and the inner-side member and applies a required braking torque to the relative rotation, characterized in that
the inner-side member is urged in the axial direction with respect to the outer-side member and the shield member by an urging means.

In this case, it is preferable that the urging means is a wave washer accommodated in the inner-side space.

According to a second aspect of the present invention, as a torque limiter which solves the above-described major technical problem, such a torque limiter is provided, including:
an outer-side member having an inner-side space whose one side in an axial-direction is closed but the other side is open;
an inner-side member and a braking member accommodated in the inner-side space; and
a shield member which is combined with the outer-side member after the inner-side member and the braking member are accommodated in the inner-side space and closes the other side of the inner-side space, in which
an axial-direction length of the inner-side space in which the other side is closed by the shield member is longer than the axial-direction length of the inner-side member, and
the outer-side member and the inner-side member are capable of relative rotation, and the braking member is disposed between the outer-side member and the inner-side member and applies a required braking torque to the relative rotation, characterized in that
the braking member is in close contact with the inner-side member and is urged in the axial direction with respect to the outer-side member and the shield member.

In this case, it is preferable that the braking member is a compression coil spring compressed by the outer-side member and the shield member from both sides in the axial direction, and including a winding portion around which a wire rod is wound and a hook portion extending in a direction in which the wire rod is separated from the winding portion, in which an outer-peripheral surface of the inner-side member has a cylindrical shape, the winding portion of the compression coil spring is attached to the outer-peripheral surface, and a diameter of the outer-peripheral surface is larger than an inner diameter of the winding portion when the compression coil spring is in a free state. In addition, it may be so constituted that the braking member is a coil spring, including a winding portion around which a wire rod is wound and a hook portion extending in a direction in which the wire rod is separated from the winding portion, an outer-peripheral surface of the inner-side member has a cylindrical shape, the winding portion of the coil spring is attached to the outer-peripheral surface, a diameter of the outer-peripheral surface is larger than an inner diameter of the winding portion when the coil spring is in a free state, and in the shield member and/or the outer-side member, an urging means for urging the coil spring in the axial direction is integrally formed. Furthermore, it may be so constituted that the braking member is a coil spring and includes a winding portion around which a wire rod is wound and a hook portion extending to a direction in which the wire rod is separated from the winding portion, and an outer-peripheral surface of the inner-side member has a cylindrical shape, the winding portion of the coil spring is attached to the outer-peripheral surface, a diameter of the outer-peripheral surface is larger than an inner diameter of the winding portion when the coil spring is in a free state, and in the inner-side space, urging means for urging the coil spring in the axial direction is accommodated.

In both the first aspect and the second aspect of the present invention, the outer-side member is a fixed housing and can be used as an angular-position holding apparatus with the inner-side member connected to an external device.

### Advantageous Effects of Invention

In a torque limiter constituted in accordance with the first aspect of the present invention, since the inner-side member is urged by the urging means in the axial direction with respect to the outer-side member and the shield member, in the inner-side space in which the other side in an axial-direction is closed by the shield member, the axial-direction both ends of the inner-side member are supported at the same time by the urging means and either one of an axial-direction side surface of the outer-side member and an axial-direction side surface of the shield member or the urging means disposed on the axial-direction both sides and thus, generation of a noise caused by rattling in the axial direction is prevented.

In a torque limiter constituted in accordance with the second aspect of the present invention, since the braking member is urged in the axial direction with respect to the outer-side member and the shield member, in the inner-side space in which the other side in an axial-direction is closed by the shield member, the axial-direction both ends of the braking member are supported simultaneously by an axial-direction side surface of the outer-side member and an axial-direction side surface of the shield member, either one of the axial-direction side surface of the outer-side member and the axial-direction side surface of the shield member and the urging means or the urging means disposed on the axial-direction both sides at the same time. Since the inner-side member is in close contact with the braking member, when the axial-direction both ends of the braking member are supported at the same time in the above-described inner-side space, the inner-side member is also supported without rattling in the axial direction in the above-described inner-side space. That is, the inner-side member is supported via the braking member. At this time, since the inner-side member is not urged in the axial direction, a so-called hit strength of the inner-side member and the outer-side member or the shield member, that is, a size of resistance caused by friction between the inner-side member and the outer-side member or the shield member does not change, and a required braking torque is set between the inner-side member and the braking member, a size of a required braking torque does not change, either. Thus, variation in the required braking torque among individuals is suppressed.

### Brief Description of Drawings

[Fig. 1] Fig. 1 is a diagram illustrating a constitution of a Preferred Embodiment of a torque limiter constituted in accordance with a first aspect of the present invention.
[Fig. 2] Fig. 2 is a diagram illustrating an outer-side member of the torque limiter shown in Fig. 1 as a single body.
[Fig. 3] Fig. 3 is a diagram illustrating an inner-side member of the torque limiter shown in Fig. 1 as a single body.
[Fig. 4] Fig. 4 is a diagram illustrating a shield member of the torque limiter shown in Fig. 1 as a single body.
[Fig. 5] Fig. 5 is a diagram illustrating a constitution of a First Embodiment of a torque limiter constituted in accordance with a second aspect of the present invention.
[Fig. 6] Fig. 6 is a diagram illustrating a constitution of a Second Embodiment of a torque limiter constituted in accordance with the second aspect of the present invention.
[Fig. 7] Fig. 7 is a diagram illustrating a constitution of a third Embodiment of a torque limiter constituted in accordance with the second aspect of the present invention.

### Description of Embodiments

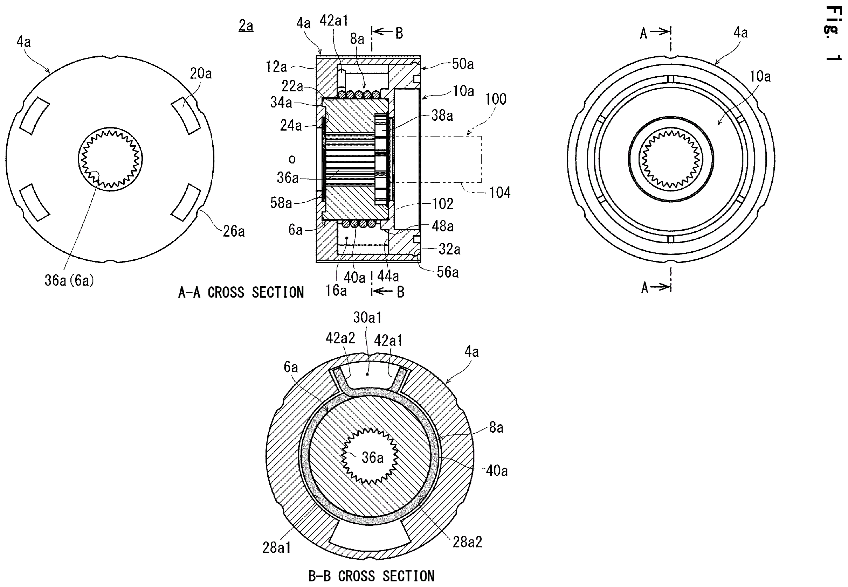

Hereinafter, with reference to the attached drawings illustrating a Preferred Embodiment of a torque limiter constituted in accordance with the present invention, explanation will be made in further detail. It is to be noted that, with respect to "one side" and "the other side" of an axial direction in the following explanation with a state illustrated in an A-A cross section in Fig. 1 as a reference, the "one side" shall refer to the left side in the drawing and "the other side" to the right side in the drawing, unless specified otherwise.

In Fig. 1, a constitution of a Preferred Embodiment of a torque limiter constituted in accordance with the first aspect of the present invention is illustrated. The torque limiter indicated by a numeral 2a as a whole includes an outer-side member 4a, an inner-side member 6a, a braking member 8a, and a shield member 10a and has a common center axis o. On a B-B cross sectional view in Fig. 1, the braking member 8a is shaded for easy understanding.

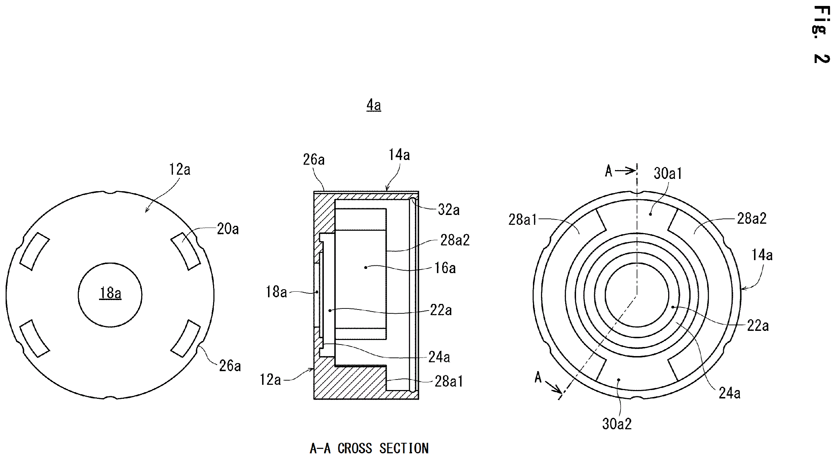

By explaining with reference to Fig. 2 with Fig. 1, the outer-side member 4a made of a synthetic resin has a circular end plate 12a disposed perpendicularly to the axial direction and an outer-peripheral wall 14a having a cylindrical shape extending from an outer-peripheral edge of this end plate 12a toward the axial-direction other side, and on an inner-side of the outer-peripheral wall 14a, an inner-side space 16a is formed. That is, the one side in the axial-direction of the inner-side space 16a is closed, but the other side is open. At a center of the end plate 12a, a circular through hole 18a penetrating in the axial direction is formed. On the outer-peripheral edge part on the axial-direction one-side surface of the end plate 12a, four pieces of arc-shaped recess portions 20a each having a required circumferential-direction width are formed at intervals in the circumferential direction. At a center part of the axial-direction other-side surface of the end plate 12a, a circular support recess portion 22a is formed, and on a bottom surface of the support recess portion 22a, an annular-shaped support protrusion 24a surrounding the outer-peripheral edge of the through hole 18a is formed. In the outer-peripheral surface of the outer-peripheral wall 14a, six pieces of recess grooves 26a each having an arc-shaped cross section and extending linearly across the whole area in the axial direction are formed at equal angular intervals in the circumferential direction. On an inner-peripheral surface of the outer-peripheral wall 14a, a pair of locking walls each having an arc-shaped cross section and extending in the axial direction from the axial-direction other-side surface of the end plate 12a to a required degree are provided at an interval in the circumferential direction (each of the locking walls is indicated by 28a1 and 28a2), and between the pair of locking walls 28a1 and 28a2, a pair of intervals 30a1 and 30a2 are present. In an axial-direction other-side end part of the inner-peripheral surface of the outer-peripheral wall 14a, an annular-shaped locking groove 32a extending in the circumferential direction is formed.

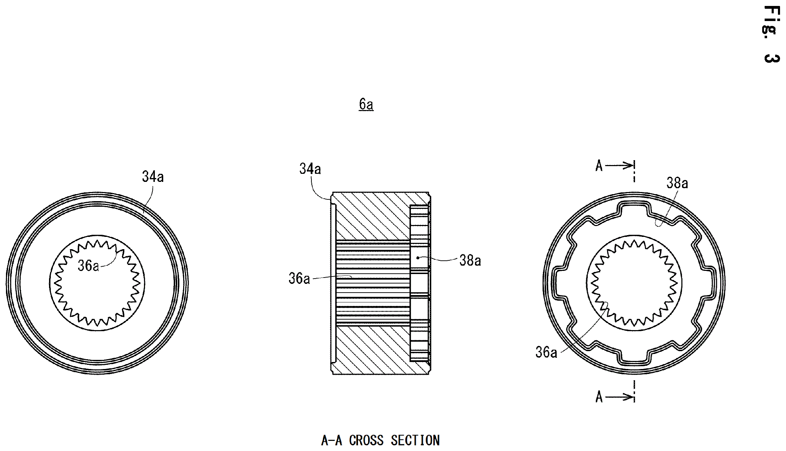

By explaining with reference to Fig. 3 with Fig. 1, the inner-side member 6a made of metal has a cylindrical shape. In the illustrated Embodiment, the outer-peripheral surface of the inner-side member 6a has a cylindrical shape. On an outer-peripheral edge part of the axial-direction one-side surface of the inner-side member 6a, an annular-shaped supported protrusion 34a is formed. On a part excluding the axial-direction other-side end part in the inner-peripheral surface of the inner-side member 6a, a female engaging portion 36a made of a serration is formed, while on an axial-direction one-side end part, a female locking portion 38a made of a spline is formed, respectively.

By explaining with reference to Fig. 1, in the illustrated Embodiment, the braking member 8a is a coil spring (hereinafter, the coil spring is indicated by a numeral 8 in some cases) including a winding portion 40a around which a wire rod made of metal is wound in a spiral state and a pair of hook portions 42a1 and 42a2 which are the wire rods extending outward in the radial direction from the winding portion 40a, and the winding portion 40a is attached to the outer-peripheral surface of the inner-side member 6a. The coil spring 8a may be either one of a compression coil spring and a tension coil spring. An inner diameter of the winding portion 40a in a free state in which no load is applied to the coil spring 8a is smaller than a diameter of the outer-peripheral surface of the inner-side member 6a (in other words, the diameter of the outer-peripheral surface of the inner-side member 6a is larger than the inner diameter of the winding portion 40a when the coil spring is in the free state), and the coil spring 8a is attached in close contact with the outer-peripheral surface of the inner-side member 6a in a state in which the inner diameter of the winding portion 40a is expanded. The pair of hook portions 42a1 and 42a2 are constituted by both end parts of the above-described wire rod. Therefore, the pair of hook portions 42a1 and 42a2 are provided at the axial-direction both ends of the winding portion 40a, respectively.

By continuing explanation with reference to Fig. 1, the inner-side member 6a and the coil spring 8a (braking member) are accommodated in the inner-side space 16a of the outer-side member 4a. At this time, the outer-peripheral surface of the axial-direction one-side end part of the inner-side member 6a is supported by the inner-peripheral surface of the outer-side member 4a regulating the support recess portion 22a of the outer-side member 4a from the outer-side in the radial direction, and the inner-peripheral surface of a supported protrusion 34a of the inner-side member 6a is supported by the outer-peripheral surface of the support protrusion 24a of the outer-side member 4a from the inner-side in the radial direction. An outer surface of the winding portion 40a of the coil spring 8a is faced with the inner-peripheral surfaces of the pair of locking walls 28a1 and 28a2, and the pair of hook portions 42a1 and 42a2 are fitted in common in the intervals 30a1. Thus, the coil spring 8a is supported in an unrotatable state with respect to the outer-side member 4a.

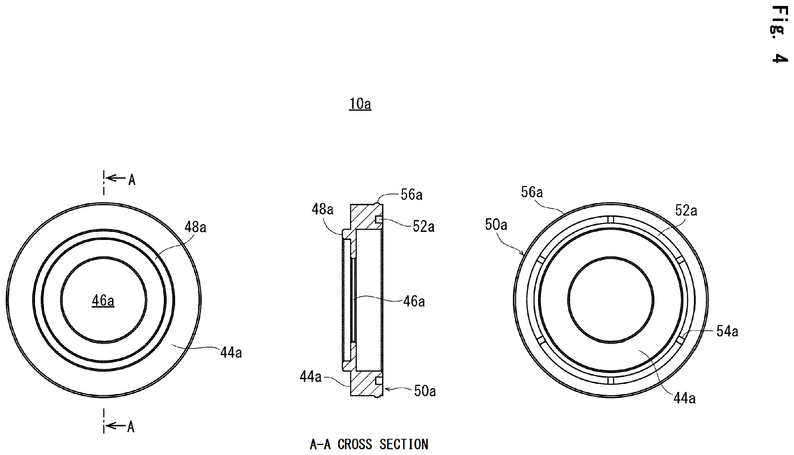

By explaining with reference to Fig. 4 and Fig. 1, the shield member 10a made of a synthetic resin includes a circular shield plate 44a disposed perpendicularly to the axial direction. At the center of the shield plate 44a, a circular through hole 46a penetrating in the axial direction is formed. On the axial-direction one-side surface of the shield plate 44a, an annular-shaped support wall 48a surrounding an outer-peripheral edge of the through hole 46a is formed. On the axial-direction other-side surface of the shield plate 44a, a cylindrically-shaped attachment wall 50a extending in the axial direction from the outer-peripheral edge is formed. On the attachment wall 50a, an annular-shaped circumferential groove 52a open toward the axial-direction other side is formed, and in the circumferential groove 52a, six pieces of ribs 54a are disposed at equal angular intervals in the circumferential direction. On an outer-peripheral surface of the attachment wall 50a, an annular-shaped locking protrusion 56a extending in the circumferential direction is formed, and when the locking protrusion 56a is locked by the locking groove 32a formed in the inner-peripheral surface of the outer-peripheral wall 14a in the outer-side member 4a, the shield member 10a is combined with the outer-side member 4a and closes the axial-direction other side of the inner-side space 16a. Thus, as illustrated on the A-A cross sectional view in Fig. 1, the axial-direction one-side surface of the shield plate 44a supports the axial-direction other-side surface of the inner-side member 6a in the axial direction, and the inner-peripheral surface of the support wall 48a supports the outer-peripheral surface of the axial-direction other-side end part of the inner-side member 6a in the radial direction. However, the axial-direction length of the inner-side space 16a whose axial-direction other side is closed by the shield member 10a is longer than the axial-direction length of the inner-side member 6a. The above-described "axial-direction length of the inner-side space 16a whose axial-direction other side is closed by the shield member 10a" is a length from the bottom surface of the support recess portion 22a of the outer-side member 4a to the axial-direction one-side surface of the shield plate 44a of the shield member 10a, and in the illustrated Embodiment, it is the axial-direction length from a part excluding the support protrusion 24a in the axial-direction other-side surface of the support recess portion 22a to the part excluding the support wall 48a in the axial-direction one-side surface of the shield plate 44a.

In the torque limiter constituted in accordance with the first aspect of the present invention, it is important that the inner-side member 6a is urged in the axial direction by the urging means with respect to the outer-side member 4a and the shield member 10a. In the illustrated Embodiment, the urging means is the wave washer 58a accommodated in the inner-side space 16a, and this is disposed inside of the support protrusion 24a of the outer-side member 4a and urges the inner-side member 6a to the axial-direction other side. If desired, the wave washer 58a may be disposed outside of the support protrusion 24a.

At this time, in the torque limiter constituted in accordance with the first aspect of the present invention, since the inner-side member 6a is urged in the axial direction with respect to the outer-side member 4a and the shield member 10a by the wave washer 58a, which is an urging means, in the inner-side space 16a whose axial-direction other side is closed by the shield member 10a, the axial-direction both ends of the inner-side member 6a are supported at the same time by the wave washer 58a and the axial-direction side surface of the shield member 10a and thus, generation of a noise caused by rattling in the axial direction is prevented. In this aspect, since it is only necessary that the inner-side member 6a is urged in the axial direction by the urging means with respect to the outer-side member 4a and the shield member 10a, the braking member may be in an arbitrary form. That is, the coil spring 8a may be brought into close contact not with the outer-peripheral surface of the inner-side member 6a but with the inner-peripheral surface of the outer-side member 4a, or when the coil spring 8a is brought into close contact with the inner-peripheral surface of the outer-side member 4a, the interval (30a1) in which the pair of hook portions 42a1 and 42a2 are fitted is formed in the outer-peripheral surface of the inner-side member. Moreover, since it is only necessary that the braking member applies a braking torque to the relative rotation of the outer-side member 4a and the inner-side member 6a, instead of the coil spring, but other means such as a plate spring or a tolerance ring may be used. Furthermore, the urging means may be disposed between the inner-side member 6a and the shield member 10a, and in this case, the axial-direction both ends of the inner-side member 6a are supported by the axial-direction side surfaces of the urging means and the outer-side member 4a at the same time. In addition, the urging means may be disposed on the axial-direction both sides of the inner-side member 6a, that is, between the inner-side member 6a and the outer-side member 4a (in more detail, the end plate 12a thereof) and between the inner-side member 6a and the shield member 10a, and in this case, the axial-direction both ends of the inner-side member 6a are supported by the urging means at the same time.

Here, in the illustrated Embodiment, the outer-side member 4a is a fixed housing held via the recess portion 20a and the recess groove 26a and is used as an angular-position holding apparatus by connecting the inner-side member 6a to an external device. In the female locking portion 38a of the inner-side member 6a, a male locking portion 102 made of a spline provided in a connecting member 100 indicated by a two-dot chain line in Fig. 1 is caused to be locked, and the inner-side member 6a and the connecting member 100 rotate integrally. In the connecting member 100, a male engaging portion 104 is further formed coaxially with the female engaging portion 36a of the inner-side member 6a. In the illustrated Embodiment, the male engaging portion 104 of the connecting member 100 is connected to an input-side device such as an electric motor, not shown, and a housing 4a is connected to an output-side device such as a hatchback of a vehicle, not shown. Therefore, when a rotational torque is applied from the input-side device, the inner-side member 6a is to rotate together with the coil spring 8a. At this time, as described above, since the coil spring 8a is unable to rotate with respect to the outer-side member 4a, in the interval 30a1 formed in the outer-side member 4a, either one of the pair of hook portions 42a1 and 42a2 is pushed in a direction where the coil spring relatively loosen by either one of peripheral-direction side surfaces of the pair of locking walls 28al and 28a2, and the inner-side member 6a is rotated with respect to the coil spring 8a against a required braking torque by a fastening power of the coil spring 8a. That is, the rotational torque from the input-side device is transmitted to the output-side device and drives this. On the other hand, when a rotational torque from the input-side device is not input, the inner-side member 6a is held by the required braking torque by the coil spring 8a. Thus, the angular position of the output-side device is held. If desired, it may be so constituted that the housing 4a is connected to the input-side device, and the male engaging portion 104 of the connecting member 100 is connected to the output-side device.

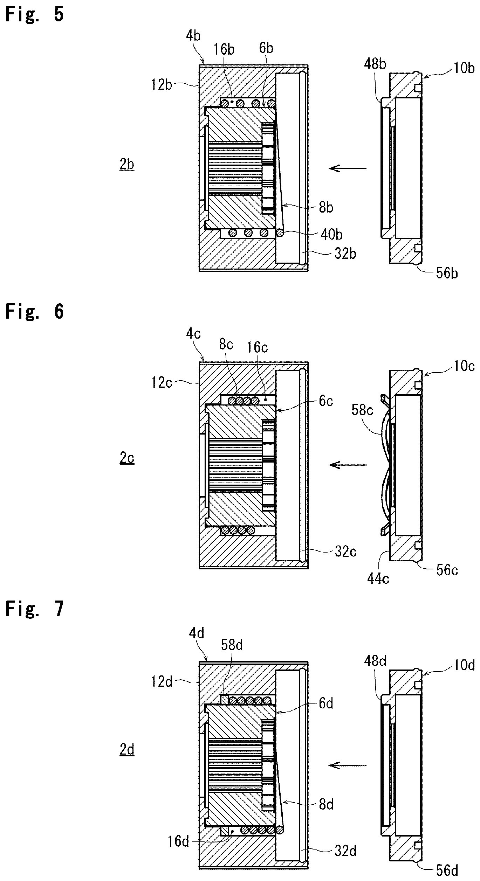

Subsequently, a torque limiter constituted in accordance with the second aspect of the present invention will be explained. In the above-described torque limiter constituted in accordance with the first aspect of the present invention, the inner-side member is urged by the urging means in the axial direction with respect to the outer-side member and the shield member, but in the torque limiter constituted in accordance with the second aspect of the present invention which will be explained below, in a point that the braking member in close contact with the inner-side member is urged in the axial direction with respect to the outer-side member and the shield member, the torque limiter constituted in accordance with the second aspect of the present invention is different from the torque limiter constituted in accordance with the first aspect of the present invention. In Fig. 5 to Fig. 7, the First Embodiment to the Third Embodiment of the torque limiter constituted in accordance with the second aspect of the present invention are illustrated, respectively. Since the entire constitution of the torque limiter according to the illustrated First Embodiment to Third Embodiment is the same as that of the torque limiter illustrated in Fig. 1, in the following explanation, the same constitutions are given the same numbers with one of letters b to d (b for the First Embodiment, c for the Second Embodiment, and d for the Third Embodiment), respectively, detailed explanation will be omitted, and only the different constitutions will be explained. In the illustrated First Embodiment to the Third Embodiment, too, a coil spring is adopted for the braking member and thus, an inner diameter of the winding portion when the coil spring is in a free state is smaller than an outer diameter of the inner-side member, and the coil spring is attached to this with the inner-peripheral surface of the winding portion in close contact with the outer-peripheral surface of the inner-side member. It is to be noted that, in Fig. 5 to Fig. 7, shield members 10b to 10d are separated from outer-side members 4b to 4d, but this is due to a reason for convenience and in actuality, they are combined by locking between locking protrusions 56b to 56d and locking grooves 32b to 32d.

In a torque limiter 2b illustrated in Fig. 5, a braking member 8b is a compression coil spring. Therefore, in the free state, the wire rod constituting a winding portion 40b has an interval in the axial direction. When the axial-direction other side of an inner-side space 16b is closed by the shield member 10b after an inner-side member 6b and the compression coil spring 8b are accommodated in the inner-side space 16b, the compression coil spring 8b is compressed by the outer-side member 4b (in more detail, the end plate 12b thereof) and the shield member 10b from the axial-direction both sides. In the illustrated Embodiment, the axial-direction other side of the compression coil spring 8b is pressed to the one side in the axial-direction by the support wall 48b of the shield member 10b. Thus, the both ends of the compression coil spring 8b are supported at the same time from the axial-direction both sides by the axial-direction side surface (that is, the end plate 12b) of the outer-side member 4b and the axial-direction side surface of the shield member 10b.

In a torque limiter 2c illustrated in Fig. 6, an urging means 58c for urging a coil spring 8c in the axial direction is formed integrally on a shield member 10c. In the illustrated Embodiment, the coil spring 8c is a tension coil spring, but it may be a compression coil spring. The urging means 58c is a wave-shaped elastic piece formed on the axial-direction one-side surface of a shield plate 44c, and when the axial-direction other side of an inner-side space 16c is closed by the shield member 10c after an inner-side member 6c and the coil spring 8c are accommodated in the inner-side space 16c, it is brought into contact with the axial-direction other-side end of the coil spring 8c and presses the same to the axial-direction one-side, and the axial-direction both ends of the coil spring 8c are supported at the same time by the axial-direction other-side surface of the end plate 12c of the outer-side member 4c and the urging means 58c from the axial-direction both sides. If desired, in this Embodiment, the urging means 58c may be formed not on the shield member 10c but on the axial-direction other-side surface of the end plate 12c of the outer-side member 4c, integrally, and in this case, the axial-direction both ends of the coil spring 8c are supported at the same time by the urging means and the axial-direction one-side surface of the shield member from the axial-direction both sides. In addition, the urging means 58c may be formed not only on the shield member 10c but also on the axial-direction other-side surface of the end plate 12c of the outer-side member 4c, integrally, and in this case, the axial-direction both ends of the inner-side member 6c are supported at the same time by an urging means 58d from the axial-direction both sides.

In a torque limiter 2d illustrated in Fig. 7, the urging means 58d for urging a coil spring 8d in the axial direction is accommodated in an inner-side space 16d. In the illustrated Embodiment, the coil spring 8d is a tension coil spring, but it may be a compression coil spring. The urging means 58d is a rubber-state ring disposed between an axial-direction other-side surface of an end plate 12d of an outer-side member 4d and a coil spring 8d, and when the axial-direction other side of the inner-side space 16d is closed by a shield member 10d after the inner-side member 6d and the coil spring 8d are accommodated in the inner-side space 16d, it is brought into contact with an axial-direction one-side end of the coil spring 8d and presses the same to the axial-direction other side, and the axial-direction both ends of the coil spring 8d are supported at the same time by the urging means 58d and the axial-direction one-side surface of the support wall 48d of the shield member 10d from the axial-direction both sides. If desired, in this Embodiment, the urging means 58d may be disposed between the axial-direction side surface of the support wall 48d of the shield member 10d and the coil spring 8d, and in this case, the axial-direction both ends of the coil spring 8d are supported at the same time from the axial-direction both sides by the axial-direction other-side surface (that is, the end plate 12d) of the outer-side member and the urging means. In addition, the urging means 58d may be disposed between the axial-direction both sides of the inner-side member 6d, that is, between the inner-side member 6d and the end plate 12d of the outer-side member 4d and between the inner-side member 6d and the shield member 10d, and in this case, the axial-direction both ends of the inner-side member 6d are supported at the same time by the urging means 58d.

In the torque limiter constituted in accordance with the second aspect of the present invention, when the braking members 8b to 8d are urged in the axial direction with respect to the outer-side members 4b to 4d and the shield members 10b to 10d, in inner-side spaces 16b to 16d whose axial-direction other sides are closed by the shield members 10b to 10d, the axial-direction both ends of the braking member 8b are supported by the axial-direction side surface of the outer-side member 4b (that is, the end plate 12b) and the axial-direction side surface of the shield member 10b, the axial-direction both ends of the braking members 8c and d are supported by either one of the axial-direction side surfaces of the outer-side members 4c and 4d (that is, the end plates 12c and 12d) and the axial-direction side surfaces of the shield members 10c and 10d and the urging means 58c and 58d or by the urging means 58c and 58d disposed on the axial-direction both sides at the same time. Since the inner-side members 6b to 6d are in close contact with the braking members 8b to 8d, when the axial-direction both ends of the braking members 8b to 8d are supported in the above-described inner-side spaces 16b to 16d at the same time, the inner-side members 6b to 6d are also supported in the above-described inner-side spaces 16b to 16d without rattling in the axial direction. That is, the inner-side members 6b to 6d are supported via the braking members 8b to 8d. At this time, since the inner-side members 6b to 6d are not urged in the axial direction, the so-called hit strength between the inner-side members 6b to 6d and the outer-side members 4b to 4d as well as the shield members 10b to 10d, that is, a size of the resistance caused by friction between the inner-side members 6b to 6d and the outer-side members 4b to 4d as well as the shield members 10b to 10d is not changed, and since the above-described required braking torque is set between the inner-side members 6b to 6d and the braking members 8b to 8d, the size of the required braking torque is not changed, either. Therefore, the variation in the required braking torque among individuals is suppressed. In the Second Embodiment and the Third Embodiment in this aspect, the braking member may be in an arbitrary form as long as it is in close contact with the inner-side members 6b to 6d and thus, it may be a plate spring, a tolerance ring or the like.

As described above, the torque limiter constituted in accordance with the present invention has been described in detail with reference to the attached drawings, but the present invention is not limited to the above-described Embodiments but is capable of appropriate modification and changes within a range not departing from the present invention. For example, in the illustrated Embodiment, the case in which the torque limiter is used as an angular-position holding apparatus, that is, the case in which the outer-side member is fixed has been explained, but the outer-side member rotates in some cases.

### Description of Reference Numerals

2a to 2d Torque limiter
4a to 4d Outer-side member
6a to 6d Inner-side member
8a to 8d Braking member
10a to 10d Shield member
16a to 16d Inner-side space
58a, 58c, 58d Urging means

## Claims

1. A torque limiter, comprising an outer-side member having an inner-side space whose one side in an axial direction is closed but the other side is open; an inner-side member and a braking member accommodated in the inner-side space; and a shield member which is combined with the outer-side member after the inner-side member and the braking member are accommodated in the inner-side space and closes the other side of the inner-side space, wherein
an axial-direction length of the inner-side space in which the other side is closed by the shield member is longer than the axial-direction length of the inner-side member; and
the outer-side member and the inner-side member are capable of relative rotation, and the braking member is disposed between the outer-side member and the inner-side member and applies a required braking torque to the relative rotation, wherein
the inner-side member is urged in the axial direction with respect to the outer-side member and the shield member by urging means.

2. The torque limiter of claim 1, wherein
the urging means is a wave washer accommodated in the inner-side space.

3. A torque limiter, comprising an outer-side member having an inner-side space whose one side in an axial-direction is closed but the other side is open; an inner-side member and a braking member accommodated in the inner-side space; and a shield member which is combined with the outer-side member after the inner-side member and the braking member are accommodated in the inner-side space and closes the other side of the inner-side space, wherein
an axial-direction length of the inner-side space in which the other side is closed by the shield member is longer than the axial-direction length of the inner-side member; and
the outer-side member and the inner-side member are capable of relative rotation, and the braking member is disposed between the outer-side member and the inner-side member and applies a required braking torque to the relative rotation,
the braking member is in close contact with the inner-side member and is urged in the axial direction with respect to the outer-side member and the shield member.

4. The torque limiter of claim 3, wherein
the braking member is a compression coil spring compressed by the outer-side member and the shield member from both sides in the axial-direction, and includes a winding portion around which a wire rod is wound and a hook portion extending in a direction in which the wire rod is separated from the winding portion; and
an outer-peripheral surface of the inner-side member has a cylindrical shape, and the winding portion of the compression coil spring is attached to the outer-peripheral surface, and a diameter of the outer-peripheral surface is larger than an inner diameter of the winding portion when the compression coil spring is in a free state.

5. The torque limiter of claim 3, wherein
the braking member is a coil spring and includes a winding portion around which a wire rod is wound and a hook portion extending in a direction in which the wire rod is separated from the winding portion;
an outer-peripheral surface of the inner-side member has a cylindrical shape, the winding portion of the coil spring is attached to the outer-peripheral surface, a diameter of the outer-peripheral surface is larger than an inner diameter of the winding portion when the coil spring is in a free state; and
in the shield member and/or the outer-side member, an urging means for urging the coil spring in the axial direction is integrally formed.

6. The torque limiter of claim 3, wherein
the braking member is a coil spring and includes a winding portion around which a wire rod is wound and a hook portion extending in a direction in which the wire rod is separated from the winding portion;
an outer-peripheral surface of the inner-side member has a cylindrical shape, the winding portion of the coil spring is attached to the outer-peripheral surface, a diameter of the outer-peripheral surface is larger than an inner diameter of the winding portion when the coil spring is in a free state; and
in the inner-side space, an urging means for urging the coil spring in the axial direction is also accommodated.

7. The torque limiter of any of claims 1 to 6, wherein
the outer-side member is a fixed housing, and the inner-side member is connected to an external device and is used as an angular-position holding apparatus.
